# EUROPEAN PATENT SPECIFICATION

(11) **EP 0 673 597 B1**
(45) Date of publication and mention of the grant of the patent: **02.06.1999**
(21) Application number: 95102741.6
(22) Date of filing: 27.02.1995
(51) Int. Cl.: A01J 25/00, A01J 25/16, A23C 19/064, B65G 65/48

(54) **Dry salt dispenser for pastafilata cheese**
Trockensalzabgabevorrichtung für Pastafilatakäse
Distributeur de sel sec pour fromage de type pastafilata

(30) Priority: 07.03.1994 IT TO940153
(43) Date of publication of application: 27.09.1995
(73) Proprietor: CMT Costruzioni Meccaniche e Tecnologia S.p.A., I-12010 Peveragno (CN) (IT)
(72) Inventor: Stefano, Tomatis, I-12010 Peveragno (CN) (IT)
(74) Representative: Spandonari, Carlo, Dr. Ing.

(56) References cited:
- WO-A-92/20235
- FR-A- 1 217 134
- FR-A- 2 258 131
- US-A- 4 448 116
- US-A- 4 626 439

## Description

This invention is concerned with a dry salt dispenser device for use in the production of pastafilata cheese. The conventional method of salting pastafilata cheese, such as mozzarella, provolone, etc., by dipping in a brine, limits the maximum obtainable salt percentage in the final product to about 1%. When higher percentages are attempted by lengthening the dipping time, the product will deteriorate, both in consequence of the osmotic process and because the unrefrigerated product continues to ripen in the brine.

In order to satisfy the demand for salting rates up to 2% and more, as desirable for certain products and on certain markets, recourse is therefore made to the direct introduction of dry salt in the pastafilata, or plastic curds. This is generally achieved by means of an auger-based dispenser which gradually feeds salt powder from a container to a sprinkling spout overhanging the passage of the pastafilata in the processing plant- However, powdered salt is ill adapted to the moist environment of a dairy. Because of its hygroscopic quality, salt tends to absorb the air moisture and thereby to become less free-flowing. In order to reduce water absorption in the salt, the salt container is generally heated: however, this does not prevent the salt from progressively clotting up into stiff lumps, particularly at the surface, due to mutual cohesion of the crystal grains following absorption and subsequent evaporation of small quantities of water, as when there are moisture fluctuations consequent to temperature variations. Rotating shovels or stirrers have therefore been used to continuously stir the powdered salt, so that the above aggregations are hindered. However, the abrasive quality of salt quickly wears down both the stirrer and the metering auger, thus changing the geometric specifications of the dispenser and consequently of the metering. Moreover, the metal of which the auger and the container are made is ground to powder and is mixed into the product. Finally, the operating costs of the equipment are increased by the need for frequent replacement of parts.

It is therefore the main object of the invention to provide a dry salt dispenser which overcomes the above drawbacks.

The invention achieves the above and other objects and advantages, such as will appear from the following disclosure, by providing a salt dispenser for pastafilata cheese, characterized in that it comprises: a container barrel for powdered salt which is drivable in rotation around an inclined axis by motor means and which is open at the top and carries a plurality of scoops attached to its inside wall along its maximum periphery and facing the direction of rotation of the barrel; and a inclined channel extending partially within the barrel through its opening, and having an upper end in form of a funnel beneath a high portion of the path of said scoops and a lower end in form of a sprinkling spout for location over a passage of the pastafilata; so that, as the barrel rotates, salt scooped up by the scoops and dropped into the channel, is sprinkled from the spout.

The invention will now be described in more detail, with references to preferred embodiments shown in the attached drawings, which are given by way of illustrative and non limiting example, and wherein:
Fig. 1 is a view in side elevation of a salt dispensing device according to a preferred embodiment of the invention;
Fig. 2 is a detail view, in an enlarged axial cross-section, of a shaft provided with a hot-water supply system, which is part of the salt dispenser of Fig. 1;
Fig. 3 is a view in cross-section made according to arrow III of Fig. 1;
Fig. 4 is an enlarged view of the funnel detail of Fig. 1;
Fig. 5 is a detail view, in an enlarged cross-section made according to arrow V of Fig. 4;
Fig. 6 is a partial side view of equipment using a salt dispenser according to Fig. 1.

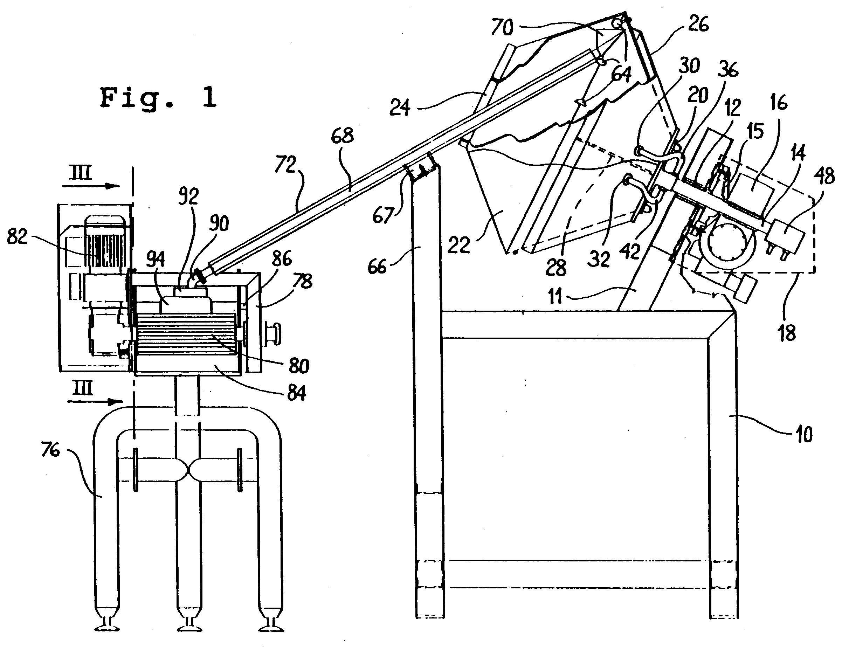

With reference to Fig. 1, the salt dispenser according to the preferred embodiment of the invention comprises a frame 10 carrying an inclined post 11, which is provided with a journal box 12 rotatably supporting an inclined shaft 14. Shaft 14 is keyed to a motor unit 16 with reduction gear, which in turn is held by post 11 through a spider 15 and is covered by a carter 18 shown dashed. Shaft 14 has a flange 20 to which the base of a barrel 22 is bolted. Barrel 22 is made of stainless steel and is shaped as two conical frustums joined at their large bases. The upper base of barrel 22, opposite flange 20, is open to form a mouth 24 for the barrel. Motor unit 16 is provided with a variator to spin barrel 22 with a desired, variable speed.

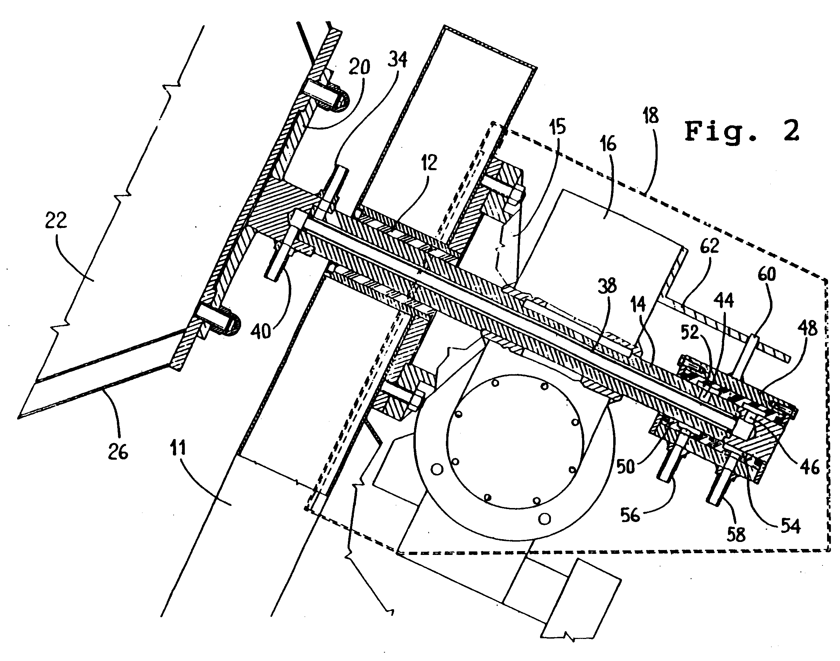

Barrel 22 is provided with a jacket 26 forming an enclosed space at least partially around its wall. The jacket is internally divided by a partition 28, with an inlet fitting 30 on one side of partition 28 and an outlet fitting 32 on the other side, so that hot water can be circulated within jacket 26 to heat the barrel. A device shown in detail on Fig. 2 is used to circulate hot water through fittings 30, 32 during the rotation of barrel 22.

As shown on Fig. 2, shaft 14 is hollow and leads to a delivery fitting 34, which is connected to the inlet fitting 30 of jacket 26 through a rubber hose 36 (Fig. 1). Moreover, within the axial cavity of shaft 14 a coaxial tube 38 is received, which leads to a return fitting 40, the latter being connected to the outlet fitting 32 of jacket 26 through a second hose 42.

At the end of shaft 14 opposite to fittings 34, 40, the two hydraulic conduits formed by the axial cavity of the shaft and by tube 38 are in communication with the outside surface of the shaft through respective bores 44, 46, cooperating with a double swivelling fitting comprising a sleeve 48 which is rotatably coupled with shaft 14 and is provided with an inside lining 50 of an elastomeric material, having two annular grooves 52, 54 at the bores 44, 46, respectively. Grooves 52, 54 lead to respective fittings 56, 58, which are intended for connection to a source of hot water, not shown. Finally, sleeve 50 is held stationary with respect to shaft 14 by the engagement of a pin 60 into a slot made in a bracket 62 carried by the motor unit 16.

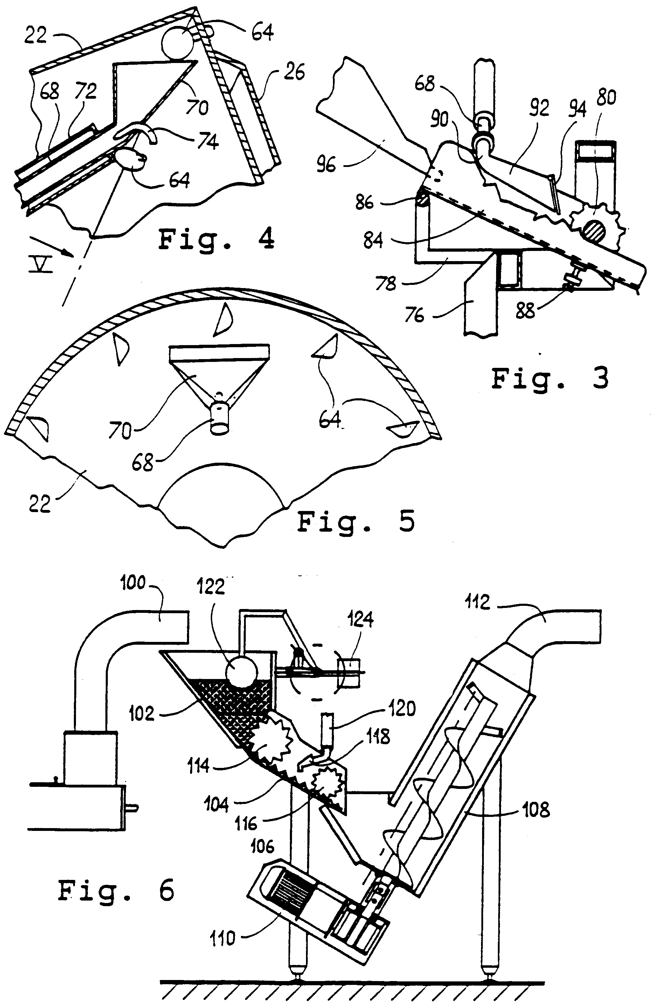

With reference to Fig. 1 again, barrel 14 carries a uniformly arranged plurality of scoops or bowls 64, shaped as small caps or cones, which are supported on pins attached to the wall of barrel 22 along its internal periphery at its maximum diameter, and projecting inwardly of the barrel. The concavities of the scoops face a direction which is substantially tangential to the direction of rotation of the barrel, but preferably they are angled outwardly by about 15 to 20° from the tangential direction, as shown on Fig. 5. As it will be explained later in more detail, during rotation of barrel 22, scoops 64 scoop up powdered salt contained in the bottom of barrel 22 (as shown by a wavy line), and drop it when they reach the top of their path and start capsizing.

A post 66 stands from frame 10 and carries a vibrating support 67, known per se, which supports a tubular channel 68, arranged obliquely in a direction opposite to barrel 22, so that it projects into the barrel through its mouth 24. The upper end of channel 68 is provided with a rectangular funnel 70 (see also Figs. 3 and 4) beneath the top of the path of scoops 64 during the rotation of barrel 22, so that it collects the salt as it is dropped by the scoops.

The channel is itself provided with a jacket 72 extending over its entire length, so that it can be heated by circulation of hot water (for simplicity, the hydraulic supply circuit is not shown). Further, as visible on the detail view of Fig. 3, an axial nozzle 74 is inserted at the upper inlet end or mouth of channel 70, for insufflating a jet of compressed air from a source of clean air, not shown, to aid the powdered salt to slide toward the outlet from the channel, due both to an ejection effect and to drag.

With further reference to Fig. 1, and also to Fig. 3, a pedestal 76 holds a frame 78, which in turn rotatably supports a roller 80 shaped with longitudinal ribs, and driven at a controllable speed by a motor unit 82 with reduction gear. Frame 78 also carries an inclined chute 84, which is hinged in 86 and which rests on a screw 88 for adjusting its inclination and consequently its distance from roller 80.

Above chute 84, the lower end of channel 68 forms a gooseneck 90 which flares into a rectangular horn or sprinkler 92, having a hinged, free shutter 94. The air flow in the channel holds shutter 94 slightly ajar from horn 92, thus forming a linear slit for sprinkling the powdered salt falling down the chute. A delivery port 96 of a stretching machine (not shown) delivers pastafilata onto chute 84, so that the pastafilata, after being sprinkled with salt by horn 92, is then squeezed and kneaded by roller 80 to further the mixing of the salt into the curd.

In the operation of the above described salt dispenser, barrel 22 is filled with fine, dry salt, e.g. to the level shown by a wavy line on Fig. 1, and jacket 26 of barrel 22, as well as jacket 72 of channel 60, are maintained heated, say at 60-70°C, by circulation of hot water. Moreover, barrel 22 is driven in slow rotation by motor unit 16. Compressed air is then supplied to nozzle 74 to generate a permanent air flow which pervades channel 68 from its mouth to sprinkler 76-78, while the vibrating support contributes to aid the salt to descend uniformly.

As barrel 22 revolves, scoops 64 withdraw in turn equal doses of salt from the barrel, and drop them into funnel 70 and therefore into channel 68. The doses of powdered salt are progressively blown along the channel by nozzle 74, and, due to the smoothing action of shutter 94, eventually emerge from sprinkler 92 as a metered, substantially continuous flow of salt powder. The mass flow of salt delivered by the sprinkler is controllable with accuracy by controlling the rotation speed of the barrel. The salt drops with substantial uniformity upon the pastafilata.

Fig. 6 diagrammatically shows a portion of a production unit for pastafilata cheese according to a modification of the invention. Conduit 100 is the terminal part of a stretching machine not shown, known per se, and delivering pastafilata, or plastic curds, to a hopper 102. The curds slide from hopper 102 along an inclined chute 104, eventually falling into a second hopper 106 of an auger-based stretching-conveying device 108, driven by a motor unit 110, which device 108 kneads and conveys the curds to an outlet conduit 112. The curds delivered from the outlet conduit 112 are further processed, e.g. in a moulding machine not shown.

During its transit along chute 104, the pastafilata is spread out and flattened by a first ribbed roller 114, driven by motor means not shown, and then again by a second ribbed roller 116. A salt sprinkler 118, terminating a channel 120 of a salt dispenser as described above (not shown on Fig. 6) overhangs the portion of chute 104 between rollers 114 and 116. The flat spreading of the curds caused by the first roller 114 ensures a uniform salting, while the action of the second roller 116 contributes to knead the salt into the curds. The subsequent kneading in the conveying device 108 completes the uniform distribution of salt in the pastafilata.

With further reference to Fig. 6, a speed variator for barrel 22 and for rollers 114 and 116 is diagrammatically shown. A float 122 hangs in hopper 102 to monitor the pastafilata level, and controls speed variators 124 for the reduction gears associated with the barrel and roller motors to increase or reduce the feeding speed of the pastafilata toward the auger kneader 108, while also increasing or reducing in step the flow of salt sprinkled on the curds, so that the salt content in the final product is kept constant.

It can be seen that the salt dispenser of the invention provides accurate salt flow rates, even for very low values of the flow. Heating both the barrel and the channel reduce to a minimum any chance of moisture absorption. Moreover, the salt is maintained in constant stirring by the rotation of the barrel, but without the salt ever being squeezed or rubbed by stirring members such as shovels or augers, and therefore with little or no abrasion.

The preferred embodiments described above have been given by way of example and may be modified by omitting certain parts or replacing them with equivalent members. For instance, the vibrating support for the channel could be omitted, as in many cases just blowing the salt may sufficient to ensure its flowing, or, on the other hand, the air blow might be omitted, the salt being allowed to flow under the action of gravity aided by vibration, or even by gravity alone. Heating of the barrel and/or the channel could be omitted, if the dispenser is used in a dry environment, or could be obtained by means different from the hot-water jackets, such as electric resistances. Also, the slit in the sprinkling spout, rather than made by a hinged shutter, could be obtained differently, say with a sash-window shutter. Further, although in the preferred embodiments one roller is used downstram of the sprinkler (Figs. 1 and 3) or two rollers both upstream and downstream (Fig. 6), it is also envisaged to use one roller only, upstream of the sprinkler, to flatten the pastafilata. The flow controller is also optional.

## Claims

1. A salt dispenser for pastafilata cheese, characterized in that it comprises: a container barrel (22) for powdered salt, drivable in rotation around an inclined axis by motor means, open at the top (24) and carrying a plurality of scoops (64) attached to its inside wall along its maximum periphery and facing the direction of rotation of the barrel; and a inclined channel (68) extending partially within the barrel through its opening, and having an upper end in form of a funnel (70) beneath a high portion of the path of said scoops and a lower end in form of a sprinkling spout (92) for location over a passage of the pastafilata; so that, as the barrel rotates, salt scooped up by the scoops and dropped into the channel is sprinkled from the spout.

2. The salt dispenser of claim 1, characterized in that a nozzle (74) opening within said channel near the funnel is arranged to insufflate an air jet in the direction of the salt feeding.

3. The salt dispenser of claim 1 or 2, characterized in that the salt sprinkling spout is flared into a horizontal sprinkling slit.

4. The salt dispenser of any of claims 1 to 3, characterized in that the barrel is provided with heater means (26-58).

5. The salt dispenser of claim 4, characterized in that said heater means comprise a water circulation jacket (26) extending over at least a part of the barrel wall and connected to a hot-water circuit (30-58).

6. The salt dispenser of any of claims 1 to 5, characterized in that said channel is provided with heater means (72).

7. The salt dispenser of claim 6, characterized in that said heater means comprise a water circulation jacket (72) encircling the channel and connectable to a source of hot water.

8. The salt dispenser of any of claims 1 to 7, characterized in that said channel is held on a vibrating support (67).

9. The salt dispenser of any of claims 1 to 8, characterized in that the channel spout overhangs an inclined sliding chute (84; 104) for the pastafilata.

10. The salt dispenser of claim 9, characterized in that a spreading roller (80; 114, 116), drivable in rotation by motor means, is arranged on the chute to spread or knead the pastafilata.

11. The salt dispenser of claim 10, characterized in that the chute is arranged to receive pastafilata from a hopper (102) and in that the speeds of the barrel and of the roller are controlled proportionally to the level of pastafilata in the hopper.

## Patentansprüche

1. Eine Salzabgabevorrichtung für Pastafilatakäse, dadurch gekennzeichnet, daß sie aufweist:
einen Behälter (22) für gekörntes Salz, welcher mittels einer Motoreinrichtung um eine schrägstehende Achse antreibbar ist, an seiner Oberseite (24) offen ist und eine Mehrzahl von Bechern (64) trägt, die an seiner Innenwand entlang des maximalen Umfanges angeordnet sind und in Drehrichtung des Behälters weisen; und
einen schrägverlaufenden Kanal (68), der sich teilweise in den Behälter durch dessen Mündung erstreckt und ein oberes Ende in Form eines Trichters (70) unterhalb des Scheitelpunktes des Pfades der Becher und ein unteres Ende in Form eines Sprühausgusses (92) hat zur Anordnung über einem Förderweg des Pastafilatas, so daß, wenn sich der Behälter dreht, von den Bechern aufgenommenes und in den Kanal abgeworfenes Salz von dem Ausguß abgegeben wird.

2. Die Salzabgabevorrichtung nach Anspruch 1, dadurch gekennzeichnet, daß eine Düse (74), die sich in dem Kanal nahe dem Trichter öffnet, dafür angeordnet ist, einen Luftstrom in Richtung der Salzförderung einzublasen.

3. Die Salzabgabevorrichtung nach Anspruch 1 oder 2, dadurch gekennzeichnet, daß das von dem Ausguß abgegebene Salz in einem horizontalen Ausgußschlitz verteilt wird.

4. Die Salzabgabevorrichtung nach einem der Ansprüche 1 bis 3, dadurch gekennzeichnet, daß der Behälter mit einer Heizvorrichtung (26-58) versehen ist.

5. Die Salzabgabevorrichtung nach Anspruch 4, dadurch gekennzeichnet, daß die Heizvorrichtung eine Wasserkreislaufummantelung (26) aufweist, welche sich über zumindest einen Teil der Behälterwand erstreckt und mit einem Heißwasserkreislauf (30-58) verbunden ist.

6. Die Salzabgabevorrichtung nach einem der Ansprüche 1 bis 5, dadurch gekennzeichnet, daß der Kanal mit einer Heizvorrichtung (72) versehen ist.

7. Die Salzabgabevorrichtung nach Anspruch 6, dadurch gekennzeichnet, daß die Heizvorrichtung eine Wasserkreislaufummantelung (72) aufweist, welche den Kanal umgibt und mit einer Heißwasserquelle verbindbar ist.

8. Die Salzabgabevorrichtung nach einem der Ansprüche 1 bis 7, dadurch gekennzeichnet, daß der Kanal auf einem Vibrationslager (67) gehalten ist.

9. Die Salzabgabevorrichtung nach einem der Ansprüche 1 bis 8, dadurch gekennzeichnet, daß der Kanalausguß über einer schräg verlaufenden Gleitrutsche (84; 104) für den Pastafilata hängt.

10. Die Salzabgabevorrichtung nach Anspruch 9, dadurch gekennzeichnet, daß eine Auswalkrolle (80; 114, 116), welche durch eine Motorvorrichtung drehbar angetrieben wird, an der Rutsche angeordnet ist, um den Pastafilata auszuwalken oder zu kneten.

11. Die Salzabgabevorrichtung nach Anspruch 10, dadurch gekennzeichnet, daß die Rutsche so angeordnet ist, daß sie den Pastafilata von einem Schütttrichter (102) aufnimmt und daß die Geschwindigkeiten des Behälters und der Rolle proportional zu der Füllmenge des Pastafilatas in dem Schütttrichter gesteuert werden.

## Revendications

1. Distributeur de sel pour fromage du type à pâte molle, caractérisé en ce qu'il comporte : un tonneau (22) formant conteneur pour du sel en poudre, pouvant être entraîné en rotation autour d'un axe incliné par des moyens formant moteur, ouvert au niveau de la partie supérieure (24) et supportant plusieurs godets (64) fixés sur sa paroi intérieure le long de sa périphérie maximum et dirigés dans la direction de rotation du tonneau ; et un canal incliné (68) s'étendant partiellement dans le tonneau à travers son ouverture, et ayant une extrémité supérieure en forme d'entonnoir (70) situé en dessous d'une partie haute du trajet desdits godets et une extrémité inférieure ayant la forme d'un bec d'arrosage (92) destiné à être positionné sur un passage de la pâte molle ; de sorte que, lorsque le tonneau tourne, le sel prélevé par les godets et laissé tomber dans le canal est répandu à partir du bec.

2. Distributeur de sel selon la revendication 1, caractérisé en ce qu'une buse (74) ouvrant dans ledit canal à proximité de l'entonnoir est agencée pour insuffler un jet d'air dans la direction de l'acheminement de sel.

3. Distributeur de sel selon la revendication 1 ou 2, caractérisé en ce que le bec d'arrosage de sel est évasé en une fente d'arrosage horizontale.

4. Distributeur de sel selon l'une quelconque des revendications 1 à 3, caractérisé en ce que le tonneau est muni de moyens de chauffage (26-58).

5. Distributeur de sel selon la revendication 4, caractérisé en ce que lesdits moyens de chauffage comportent une enveloppe de circulation d'eau (26) s'étendant sur au moins une partie de la paroi du tonneau et reliée à un circuit d'eau chaude (30-58).

6. Distributeur de sel selon l'une quelconque des revendications 1 à 5, caractérisé en ce que ledit canal est muni de moyens de chauffage (72).

7. Distributeur de sel selon la revendication 6, caractérisé en ce que lesdits moyens de chauffage comportent une enveloppe de circulation d'eau (72) entourant le canal et pouvant être reliée à une source d'eau chaude.

8. Distributeur de sel selon l'une quelconque des revendications 1 à 7, caractérisé en ce que ledit canal est maintenu sur un support vibrant (67).

9. Distributeur de sel selon l'une quelconque des revendications 1 à 8, caractérisé en ce que le bec du canal surplombe une goulotte coulissante inclinée (84 ; 104) pour la pâte molle.

10. Distributeur de sel selon la revendication 9, caractérisé en ce qu'un rouleau de répartition (80 ; 114, 116), pouvant être entraîné en rotation par des moyens formant moteur, est agencé sur la goulotte pour étaler ou pétrir la pâte molle.

11. Distributeur de sel selon la revendication 10, caractérisé en ce que la goulotte est agencée pour recevoir de la pâte molle provenant d'une trémie (102) et en ce que les vitesses du tonneau et du rouleau sont commandées proportionnellement au niveau de la pâte molle dans la trémie.
